# EUROPEAN PATENT APPLICATION

(11) **EP 1 649 993 A1**
(43) Date of publication of application: **26.04.2006**
(21) Application number: 05381047.9
(22) Date of filing: 20.10.2005
(51) Int. Cl.: B27M 1/08, B27G 5/00, B32B 15/10

(54) **Procedure for manufacturing non-flat structures with a metallic external surface and the structure obtained thereby**

(30) Priority: 25.10.2004 ES 200402546
(71) Applicant: Lloveras Calvo, Juan, Barcelona (ES)
(72) Inventor: Lloveras Calvo, Juan, Barcelona (ES)
(74) Representative: Esteban Perez-Serrano, Maria Isabel

(57) **Abstract**

The object of the present invention is a procedure for producing non-flat structures with a metallic external surface and the structure obtained thereby, characterised in that it starts with a stratified plate to which is applied a mechanical procedure divided into several stages, in order to obtain a lineal structure that can be decomposed into planes, the live edges of which are made in the covering aluminium (1.1) with continuity, preventing breaks.

## Description

### OBJECT OF THE INVENTION

The object of the present invention is a procedure for producing non-flat structures with a metallic external surface and the structure obtained thereby.

The present invention is characterised by a stratified plate which is in turn composed of at least two sheets, one of aluminium and the other of wood or fibre; optionally, an additional sheet of paper with melamine resin may be incorporated.

This plate constitutes the starting point of the invention; a mechanical process comprising several stages is applied on it to obtain a final product consisting only of the initial stratified plate.

The completed assembly of the various sheets with suitable thickness provides an appearance of aluminium on both sides due to both the outer face, which is indeed of aluminium and allows to obtain the visual and tactile properties required, and to the inner face, which when made of paper with a melamine resin imitating metal for example provides a similar effect.

### BACKGROUND OF THE INVENTION

Several different stratified plates are known composed in turn of sheets of different materials.

Among the various solutions that join different materials in the stratified structure of the plate can be cited Japanese patent with publication number JP03083632, which describes a composite material formed of sheets.

The problem with plates of this type appears when they must be used to cover or build surfaces with plane changes which require to fold the plates.

With the plate composition described above it is not possible to fold the plate, as without the presence of a plastic material the compression of the internal fibres of the wood and the traction of its external fibres cause said plate to break.

Also known is the solution of this problem by constituting a surface with several plane changes by joining several plates, wherein the ends of these plates are sheared with the required angle to form the desired surface.

In these configurations the drawback is the poor finish of the plane change lines, which is not acceptable when intended for objects that must present a good appearance from an aesthetic point of view, as well as the live edges that result from the intersection of these planes, which can even be dangerous due to the risk of producing cuts.

Also known is the extrusion process applied to obtain aluminium profiles with a specific cross section.

The drawback of this technique is its high cost, due to both the manufacturing process and the amount of aluminium used.

All of these drawbacks are overcome by the invention described below.

### DESCRIPTION OF THE INVENTION

The present invention relates to the procedure applied to a stratified plate mainly comprising two sheets, one of anodised aluminium and the other of wood or fibre, joined by adhesive; the plate may also incorporate a third sheet of paper with melamine resin also joined by an adhesive to the wood or fibre sheet.

In addition, this invention is characterised by the structure obtained by said process, which has plane changes without the presence of live edges and in which the exposed part is metallic.

Folding the original stratified plate is not possible, as the wood would suffer compression tensions in the part in contact with the paper with melamine resin sheet and traction tensions in the part in contact with the anodised aluminium sheet when attempting to create a convex edge, which would lead to first cracks and then breakage.

For this reason, in order to fold the stratified plate a section is obtained containing only aluminium, which has a good performance upon folding.

Thus, in a first stage the wood or fibre is removed by making several cuts, such as converging cuts, or by grinding to obtain a recess or cut-out that reaches the aluminium sheet.

If the aforementioned operation involved making a double cut or a grinding in the form of a symmetric V-shape with a total angle of 90°, the fold will be made until the two free edges of the cut are opposite each other one either side of the channel, the indenture constituting a guide for the fold.

Similarly, the fold can be made in the opposite sense, to constitute a structure in which the surfaces left free after the cutting are separated.

Another possible configuration that can be obtained by the procedure of the invention is a sandwich structure formed by the wood or fibre covered by aluminium on the profile.

In this case the cutting or grinding operations forms a U-section channel in the plate in which the channel width must be twice its depth, plus the tolerance required by the minimum radii required of folding aluminium according to its thickness.

After the U-section channel is formed a 180° fold is made to provide a structure with two 90° plane changes; in other words, a structure with a thickness that is twice that of the initial plate and in which its entire outer surface is made of aluminium.

It is also possible to form the structure by the process in which the V-section channel forms an angle other than 90° and others in which this channel is asymmetric.

In some cases, the machining preferably made by cutting or grinding can extend to part of the aluminium sheet, creating one or more weakened lines depending on the machining process which will facilitate the subsequent folding.

In addition, always based on the procedure described above, it is possible to make combinations of the aforementioned channels both with a V-shape and a U-shape, provided there is no interference of the folded parts in the folding stage.

The sheets that meet in the resulting final structure are attached to each other by an adhesive. The structure obtained by this procedure is also considered part of the invention.

### DESCRIPTION OF THE DRAWINGS

The present descriptive memory is completed by a set of drawings which illustrate the preferred embodiment and in no way limit the invention.

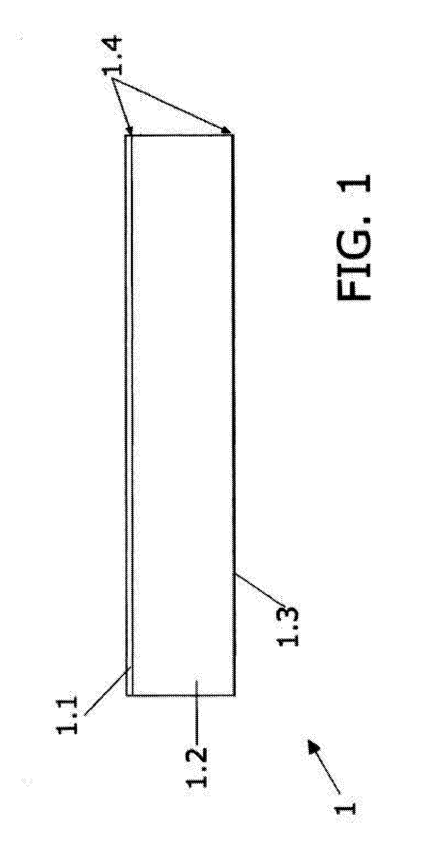

Figure 1 shows the cross section of an embodiment of the invention in which the starting plate has three sheets.

Figure 2 shows the cross section of the starting plate in which two matching oblique 45° cuts have been made to form a 90° angle.

Figure 3 shows the cross section of the plate of figure 2 in which a 90° fold has been made.

Figure 4 shows the cross section of the starting plate in which a U-shaped recess has been made in its entire length.

Figure 5 shows the cross section of the plate of figure 4 in which a 180° fold has been made.

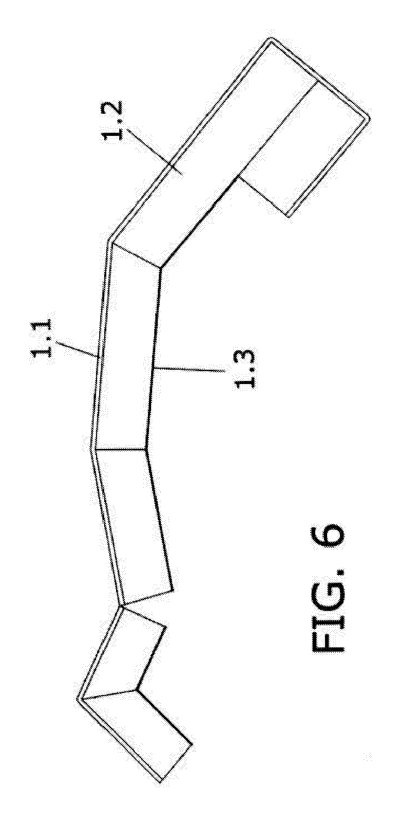

Figure 6 shows the cross section of a final structure in which several of the operations made in the plates of the previous figures have been jointly established.

### PREFERRED EMBODIMENT OF THE INVENTION

In view of the above, the present invention relates to a procedure for obtaining non-flat structures with a metallic external surface as well as the structure obtained thereby.

This procedure is characterised by a series of machining operations made on a stratified plate (1).

This stratified plate (1) is composed in this example by three sheets of different materials, an aluminium sheet (1.1), an intermediate wood or fibre sheet (1.2) and an also external sheet of paper with melamine resin (1.3) which also imitates the aluminium sheet (1.1), joined to one another by an adhesive (1.4).

One or several machinings are made on the plate (1), preferably by cutting or grinding the face corresponding to the paper with melamine resin sheet (1.3), when one exists, and the wood or fibre sheet (1.2).

In some cases the machining preferably made by cutting or grinding can reach part of the aluminium sheet (1.1), creating one or several weakened lines depending on the machining which will facilitate a subsequent folding.

In this way, one or several channels are formed in the plate (1) with different shapes, preferably with a V-section (1.2.1) or a U-section (1.2.2).

If the previous operation involves a double cut or grinding to generate a V-section channel (1.2.1) the fold is made until the two free surfaces of the plate cut on either side of the V-section channel (1.2.1) are opposite each other, the indenture constituting a folding guide.

If a U-section channel (1.2.2) is machined the fold will have 180°, so that a structure is obtained with two 90° plane changes, this is, a structure with a thickness that is twice that of the initial plate, creating a sandwich type structure in which the entire outer surface is made of aluminium (1.1).

The matching sheets in the resulting final structure are attached to one another by adhesive (1.2.3), thereby constituting a structure with plane changes with a metallic external or exposed surface.

The resulting structure obtained by the procedures described above is also part of the invention.

As a first example, a cutting or grinding procedure is described on the paper with melamine resin sheet (1.3) and the wood or fibre sheet (1.2) to produce a symmetric V-section channel (1.2.1) which covers a 90° angle, the aluminium sheet (1.1) having a thickness from 0.5 to 1 mm, wherein the subsequent fold will be made until the two parts of the plate (1) that are on either side of the V-section channel (1.2.1) are opposite each other, being joined by an adhesive (1.2.3).

A second example is a cut or grinding made in the stratified plate (1) wherein the angle covered is not 90°.

A third example is a cut or grinding made in the stratified plate (1) wherein the V-section channel (1.2.1) is not symmetrical.

A fourth example is a cut or grinding made in the stratified plate (1) wherein the fold is made in the opposite sense to that of the first preferred example, in which the surfaces left free after the cut are separated.

A fifth example is the description of the first example in which the machining made preferably by cutting or grinding reaches part of the aluminium sheet (1.1) to create a weakened line that simplifies the subsequent folding.

A sixth example is a cutting or grinding operation that forms a U-section channel (1.2.2) on the plate (1) with dimensions allowing two folds to define a structure with two 90° plane changes, this is, a sandwich-type structure with a thickness twice that of the initial plate (1), in which the entire external surface is made of aluminium (1.1).

A seventh example is the description of the sixth example wherein the machining preferably made by cutting or grinding reaches, in the intersection of the sides with the base of the U-section channel (1.2.2), part of the aluminium sheet (1.1) to create two weakened lines that simplify the subsequent folding.

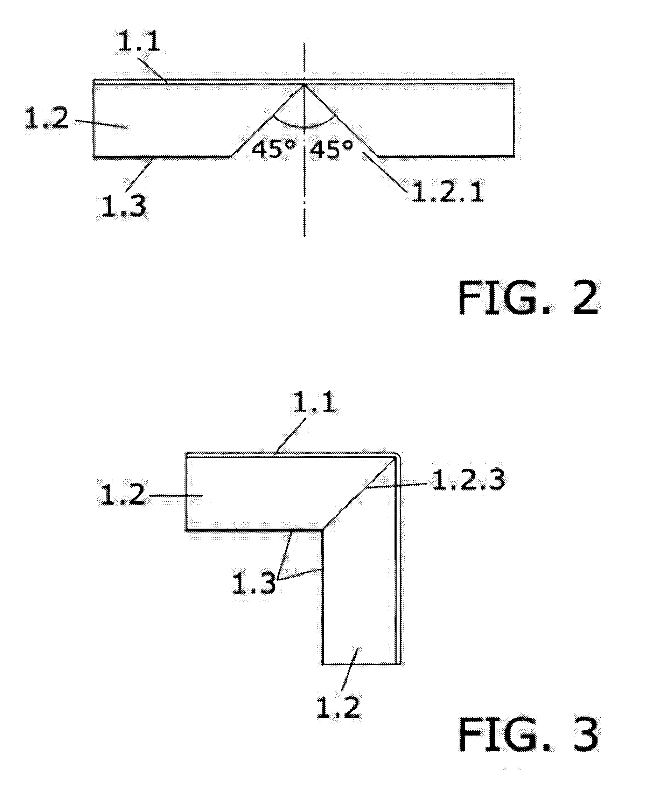

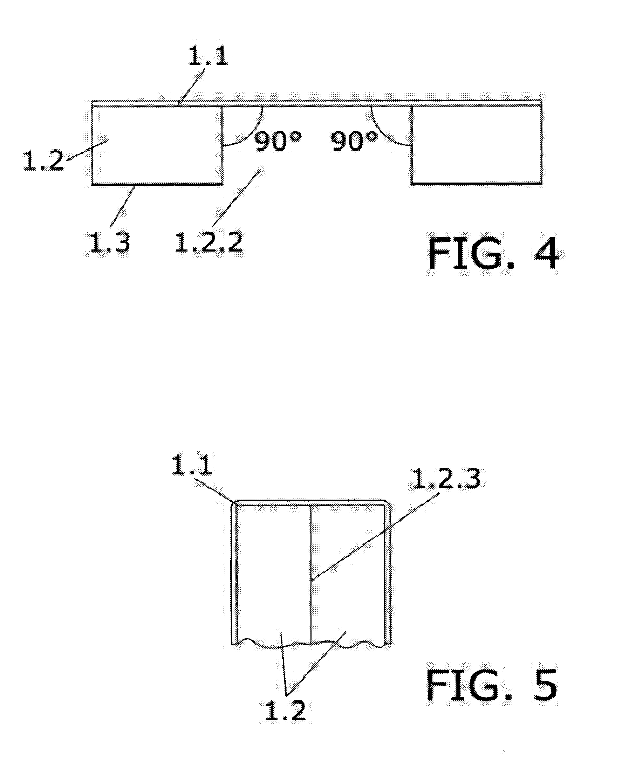

Thus, combinations based on the procedure described above allow to obtain, as long as the folding stage does not cause interferences between the parts of the plate (1), a structure in which the aluminium sheet (1.1) is disposed on planes between which an edge is defined, such that the sections in which the plane changes can be of any of the following types:
A first type of plane change section, shown in figure 3, in which the aluminium sheet (1.1) has a protruding or convex edge on its exposed face, solving the break in the stiff wood or fibre sheet (1.2) by an adhesive (1.2.3).
A second type of plane change section in which the aluminium sheet (1.1) has a concave edge on its exposed face, without solving the break of the break in the stiff wood or fibre sheet (1.2).
A third type of plane change section, shown in figure 5, in which the aluminium sheet (1.1) has two convex edges, each one forming a 90° angle on its exposed face, solving the break in the stiff wood or fibre sheet (1.2) by an adhesive (1.2.3) in the common faces such that this stiff wood or fibre sheet (1.2) has a thickness that is twice that of the previous types and the aluminium sheet (1.1) embraces the double reinforcement structure on the outside.

The essence of this invention is not affected by variations in the materials, shape and size of its component elements, described in a non-limiting manner that should allow an expert in the field to reproduce it.

## Claims

1. Procedure for producing non-flat structures with a metallic external surface, **characterised in that** a stratified plate (1), composed of at least one aluminium sheet (1.1) and a stiff wood or fibre sheet (1.2) joined to each other by adhesive (1.4), is subjected to a machining to remove material preferably by cutting on the part corresponding to the wood or fibre (1.2) until reaching the aluminium sheet (1.1), forming in the plate (1) a channel (1.2.1, 1.2.2), subsequently folding the aluminium sheet (1.1) at said channel (1.2.1, 1.2.2) to obtain a change of plane on the exposed metallic surface without any external breaks.

2. Procedure for producing non-flat structures with a metallic external surface according to claim 1, **characterised in that** if the free surfaces after the machining are in contact an adhesive (1.2.3) is used to join them.

3. Procedure for producing non-flat structures with a metallic external surface according to claim 1, **characterised in that** the machining, preferably performed by cutting at the part corresponding to the wood or fibre (1.2) sheet, forms a V-section channel (1.2.1) in the plate (1), subsequently folding the aluminium sheet (1.1) at said V-section channel (1.2.1) and thereby constituting an edge.

4. Procedure for producing non-flat structures with a metallic external surface according to claim 3, **characterised in that** the machining to remove material preferably by cutting penetrates partially in the aluminium sheet (1.1).

5. Procedure for producing non-flat structures with a metallic external surface according to claim 3, **characterised in that** el V-section channel (1.2.1) has a symmetric configuration.

6. Procedure for producing non-flat structures with a metallic external surface according to claim 3, **characterised in that** el V-section channel (1.2.1) has an asymmetric configuration.

7. Procedure for producing non-flat structures with a metallic external surface according to claim 3, **characterised in that** the folding is performed in an opposite sense, constituting a structure in which the free areas after the cut are separated.

8. Procedure for producing non-flat structures with a metallic external surface according to claim 3, **characterised in that** the machining preferably by cutting at the part corresponding to the wood or fibre sheet (1.2) forms a U-section channel (1.2.2) in the plate (1), making two 90° folds and thereby constituting a sandwich structure with two plane changes on the exposed metallic surface without external breaks.

9. Procedure for producing non-flat structures with a metallic external surface according to claim 8, **characterised in that** the machining to remove material preferably by cutting penetrates partially in the aluminium sheet (1.1) at the points of intersection of each side with the base of the U-section channel (1.2.2).

10. Procedure for producing non-flat structures with a metallic external surface according to claim 1, **characterised in that** the final thickness of the aluminium sheet (1.1) after performing the machining, both if it penetrates the aluminium sheet and if it does not, is from 0.5 to 1 mm.

11. Procedure for producing non-flat structures with a metallic external surface according to claim 1, **characterised in that** the machining for removing material is performed by grinding.

12. Non-flat structure with a metallic external surface, **characterised in that** it is provided with a continuous aluminium sheet (1.1) which forms the exposed side of said structure and a discontinuous stiff wood or fibre sheet (1.2), joined to each other by an adhesive (1.4) on the concealed side of the aluminium sheet (1.1), disposed on planes between which is defined an edge such that the change of plane sections can be of any of the following types:
• That in which the aluminium sheet (1.1) has a protruding or convex edge on its exposed face, solving the break in the stiff wood or fibre sheet (1.2) by an adhesive (1.2.3); or
• That in which the aluminium sheet (1.1) has a concave edge on its exposed face, without solving the break in the stiff wood or fibre sheet (1.2); or
• That in which the aluminium sheet (1.1) has two concave edges, each one forming a 90° angle on is exposed face, solving the break in the stiff wood or fibre sheet (1.2) by an adhesive (1.2.3) on the common faces, such that this stiff wood or fibre sheet (1.2) is twice as thick as in the previous types and the aluminium sheet (1.1) embraces the double reinforcement structure from the outside.

13. Non-flat structure with a metallic external surface obtained according to claim 12, **characterised in that** the aluminium sheet (1.1) is of the anodised type.

14. Non-flat structure with a metallic external surface obtained according to claim 12, **characterised in that** the plate (1) has a sheet of paper with melamine resin (1.3) joined to the wood or fibre sheet (1.2) on the face opposite that in which the aluminium sheet (1.1) is present.
